# EUROPEAN PATENT APPLICATION

(11) **EP 4 567 775 A1**
(43) Date of publication of application: **11.06.2025**
(21) Application number: 24152651.6
(22) Date of filing: 18.01.2024
(51) Int. Cl.: G09F 7/18, G09F 15/00

(54) **ADVERTISING FRAME MOUNTED WITH AN ADVERTISING FRAME FILLING**

(30) Priority: 07.12.2023 PL 44702623
(71) Applicant: FLAGOWA KRAINA spólka z ograniczona Odpowiedzialnoscia, 44-348 Skrzyszów (PL)
(72) Inventor: LENCZYK, Leszek, 44-350 Gorzyczki (PL)
(74) Representative: Korbela, Anna

(57) **Abstract**

The developed filling (1) for an advertising frame (2) mounted in an advertising frame (2), of the 'open-insert-close' type, is characterized by being made of nonwoven fabric obtained from plastic or knitted fabric obtained from plastic, or woven fabric obtained from plastic. This material exhibits specific physical properties, i.e., the filling (1) is:
• ecological,
• chemically homogeneous (100% polyester), it is suitable for further recycling,
• durable - exhibits high resistance to mechanical damage (such as abrasion, tearing),
• elastic - does not deform,
• environmentally safe (biodegradable material),
• moisture-resistant,
• has a grammage ranging from 50 to 400 g/m²,
• has a material thickness ranging from 0.2 to 2 mm.

Filling (1) of the advertising frame (2) on one side has a print (3) and is placed in a snap-lock advertising frame (2), where the advertising frame (2) on the inner circumference, i.e.:
- on the inner surface of the clips (4), i.e., the surface that, after inserting the filling (1) into the advertising frame (2) and closing the clips (4), comes into contact with the print surface (3) of the filling (1), or
- on the inner edge of the plate (6) of the advertising frame (2),
has a hook-and-loop fastener (5) attached with hooks, where the hook-and-loop fastener (5) is 5 to 70 mm wide.

## Description

The subject of the invention is an advertising frame filling mounted in an advertising frame, which serves to present the advertising content (e.g., in the form of a sales offer, price information, or currently promoted products). The filling in question is inserted into the advertising frame, which constitutes a permanent structure inside store surfaces or serves as a fixed structure mounted externally to a substrate, buildings, or other constructions.

The feature of the invention is an advertising frame with a structure adapted in such a way that it is possible to fill its outline with the developed filling representing the advertising content.

There are known many fillings for advertising frames as well as many designs of advertising frames.

Thus, from the Dutch patent application No. WO2011149348A1 (published on 1 December 2011), there is a solution known as 'System and frame mounting means for mounting an advertising banner to an outside wall'. The solution describes a system for mounting a banner, for example an advertising banner, to an (outside) wall or an advertising column, comprising a stretching frame having a circumferential edge by means of which the advertising banner can be stretched, and frame mounting means for mounting the stretching frame to the (outside) wall or the advertising column, characterised in that the stretching frame is provided with banner fastening means extending parallel to the circumferential edge. The banner fastening means are spaced from the circumferential edge in rearward and inward direction therefrom, seen from the front.

There is also known a Korean patent, which also obtained a European patent No. EP3312017B1 (with priority from 18 June 2015) titled an 'Apparatus and method for carrying out printing on inner and outer surfaces of a building'. The subject of the invention is the method of printing the printed text on the inner and outer surfaces of a building by using a printing apparatus in which a printing ink to be used for a piezo method or a printing ink made of a UV curable material can be placed in a spray means according to a user's selection, where a piezo method or a UV curing method can be selected according to the type of printing ink placed in the spray means, and spraying of a printing ink using a piezo method or a UV curing method. Curing and spraying of a coating agent are carried out sequentially since a spray means, a curing means and a coating agent application means are arranged sequentially.

Another solution has been described in the description of the Chinese utility model no. CN203931433U (published on 5 November 2014) which is an 'Advertising frame'. The utility model discloses an advertising frame, which comprises an advertising frame body and a base for supporting the advertising frame body, wherein the advertising frame body comprises a plurality of bracket rods and connecting pieces arranged in corners for connecting the bracket rods; each bracket rod has a square cross section so that the bracket rods can be conveniently spliced, and meanwhile, different types of advertising banners can be conveniently arranged on the bracket rods.

Another solution regarding advertising frames is presented in the description of the Chinese utility model application number CN213183528U published on 11 May 2021 titled an 'Advertising frame'. The utility model discloses an advertising frame which comprises a bottom plate, a frame and a panel, and is structurally characterized by further comprising a magnet. The magnet is arranged at the peripheral edge of the bottom plate. The frame is of an integrally-formed four-edge square frame structure; the frame is made of a ferromagnetic material, and the frame is connected with the peripheral edge of the bottom plate. And the panel is fixed on the surface of the bottom plate through the frame.

Therefore, there are known snap-lock aluminium advertising frames, commonly known as snap frames, which were designed for displaying advertising prints on rigid media (usually PVC or polypropylene) with a thickness usually between 2 and 5 mm (depending on the size of the print). The known PVC or PP prints are usually printed with solvent-based inks or UV-cured inks, and both contain the so-called VOCs (volatile organic compounds).

There are also known rigid cardboard boards which must be coated at least partially with wax or a similar substance to be water resistant. Such protection makes it impossible or very difficult to recycle the rigid cardboard boards obtained in this way.

The purpose of the developed invention is to obtain a filling for an appropriately changed and adapted advertising frame, which will be easily replaceable in the frame, and during the transportation will take up significantly less space (which will result in a dramatic reduction in transportation costs as well as a reduction in the carbon footprint), which will also be resistant to weather conditions (such as rain or snow), and will be also resistant to mechanical damage.

The essence of the developed invention is the advertising frame filling mounted in an advertising frame of the so-called 'open-insert-close' type, characterized by the fact that the filling is made of nonwoven fabric obtained from plastics, or knitted fabric obtained from plastics, or woven fabric obtained from plastics, where the material exhibits specific physical properties, i.e. the filling is:
- ecological,
- chemically homogeneous (100% polyester), it is suitable for further recycling,
- durable - exhibits high resistance to mechanical damage (such as abrasion, tearing),
- elastic - does not deform,
- environmentally safe,
- moisture-resistant,
- has a grammage ranging from 50 to 400 g/m²,
- has a material thickness ranging from 0.2 to 2 mm, and at the same time the filling of the advertising frame has a print on one side and is placed in a snap-lock advertising frame, where the advertising frame on the inner circumference, i.e.:
   - on the inner surface of the clips, i.e. the surface which, after inserting the filling into the advertising frame and closing the clips, comes into contact with the print surface of the filling, or
   - on the inner edge of the plate of the advertising frame,
   has a hook-and-loop fastener attached with hooks, where the hook-and-loop fastener is 5 to 70 mm wide.

The filling can be made of nonwoven fabric.

Preferably, the filling is made of recycled material, the so-called RPET material.

Usually, there is a print on the filling material made with water-based inks.

Typically, there is a print on the filling material made with water-based sublimation inks.

Typically, the advertising frame is made of aluminium.

Sometimes the hook-and-loop fastener is attached to the advertising frame by adhesion, screwing or riveting.

Sometimes, a soft part of the hook-and-loop fastener with loops is sewn or glued to the filling, where the hook-and-loop fastener has a width ranging from 5 to 70 mm.

The advantage of the presented solution is the fact that the developed filling for the advertising frame can be rolled up in such a way that it significantly reduces the space required for its transportation compared to solutions used thus far. The ability to easily, quickly, and economically transport prints to frames enables cheaper transportation of a greater quantity of products than with currently known solutions. The smaller size of the filling also facilitates transport through external courier companies, which impose restrictions on the size of the dispatched package. This fact contributes favourably to reducing transportation costs and significantly decreases the carbon footprint per unit product.

Nonwoven fabric typically used for producing the filling of the advertising frame is waterproof, allowing it to maintain its physical properties for an extended period (regardless of prevailing weather conditions) and is also resistant to mechanical damage.

In the production process of nonwoven fabric, the CO₂ emission per square meter of the material is significantly lower compared to the production of boards made of polypropylene or PVC.

The developed invention allows for the production of filling for the advertising frame using interfacing made from R-PET fibres, which can be obtained, for example, by processing plastic bottles. This means that the production of the frame filling will also have a positive impact on the environment, as it involves utilizing existing waste materials and preventing environmental pollution caused by accumulating plastic, which may take as long as 20 to 1000 years to decompose depending on the type of material, structure, and size. Additionally, when the filling for the advertising frame is no longer needed or does not contain a current offer, it can also be subjected to recycling (so-called chemical recycling), thus achieving a so-called closed-loop system.

The production of filling for the advertising frame according to the developed invention also envisages the use of materials manufactured from PET waste, making the developed solution even more environmentally friendly.

However, another advantage of the developed invention is the fact that it allows the use of a frame structure known so far, which is adapted to be filled with a rigid filling outlining advertising content. This enables the adjustment of the advertising frame to the parameters (primarily thickness) of the newly developed, flexible, and environmentally friendly filling.

Additionally, the hook-and-loop fastener can also be made entirely from polyester, just like the sewing threads. Therefore, the filling is a product made 100% from polyester, chemically uniform, and as such, suitable for recycling without the need to separate its components.

The filling for the advertising frame and the advertising frame itself, according to the developed invention, are further presented in exemplary embodiment drawings, in which:

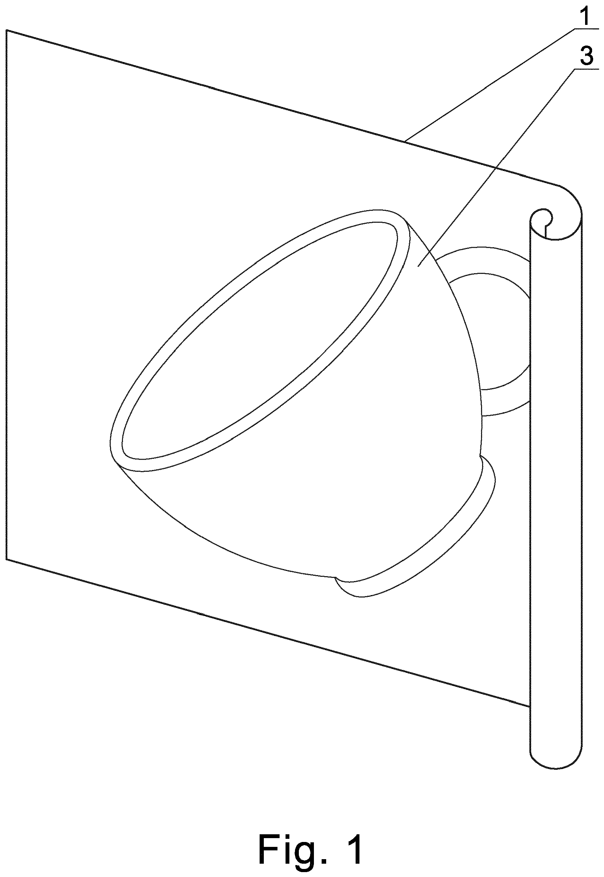

- fig. 1 -: presents, in an axonometric view, a rolled filling of an advertising frame, used to advertise the cup presented on it,

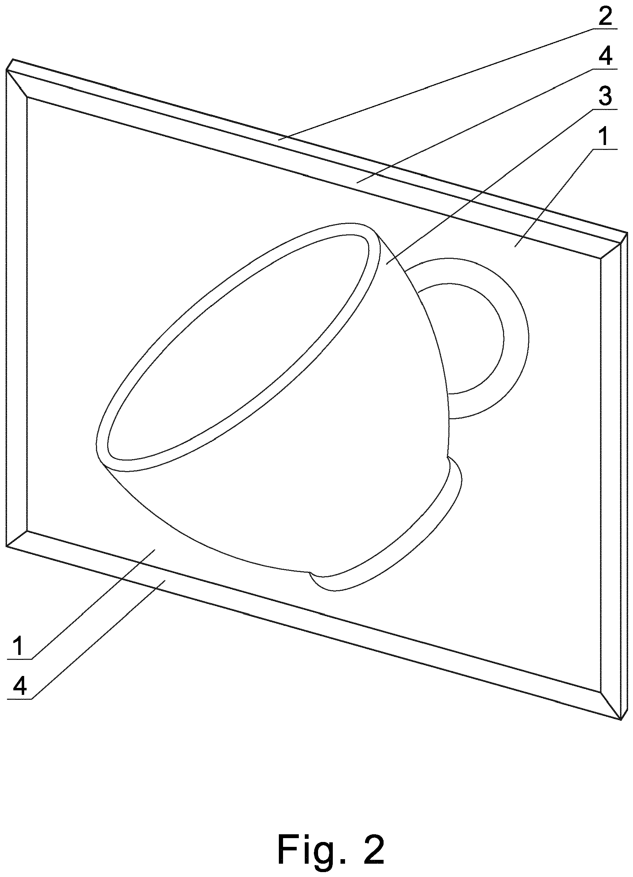

- fig. 2 -: presents, in an axonometric view, a filling of the advertising frame mounted in the advertising frame,

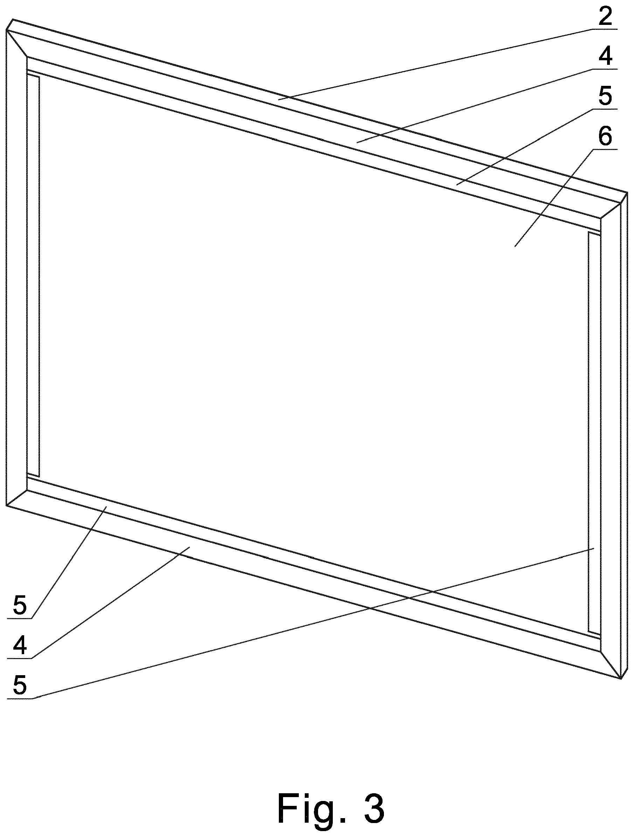

- fig. 3 -: presents, in an axonometric view, the advertising frame with visible hook-and-loop fasteners attached to the bottom plate of the advertising frame,

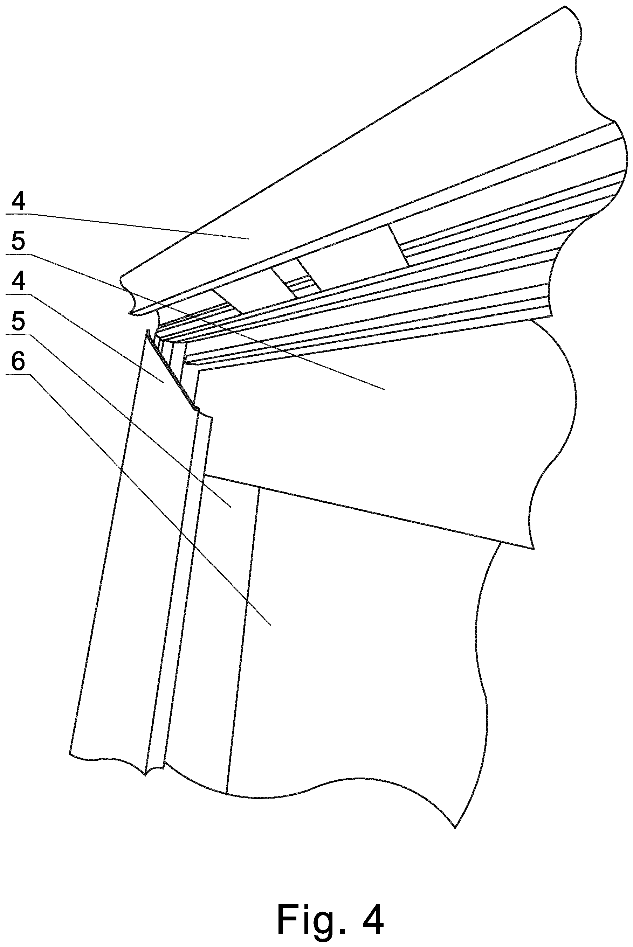

- fig. 4 -: presents, in a perspective view, the corner of the advertising frame with an open upper hook of the advertising frame and hook-and-loop fasteners attached to the bottom plate of the advertising frame,

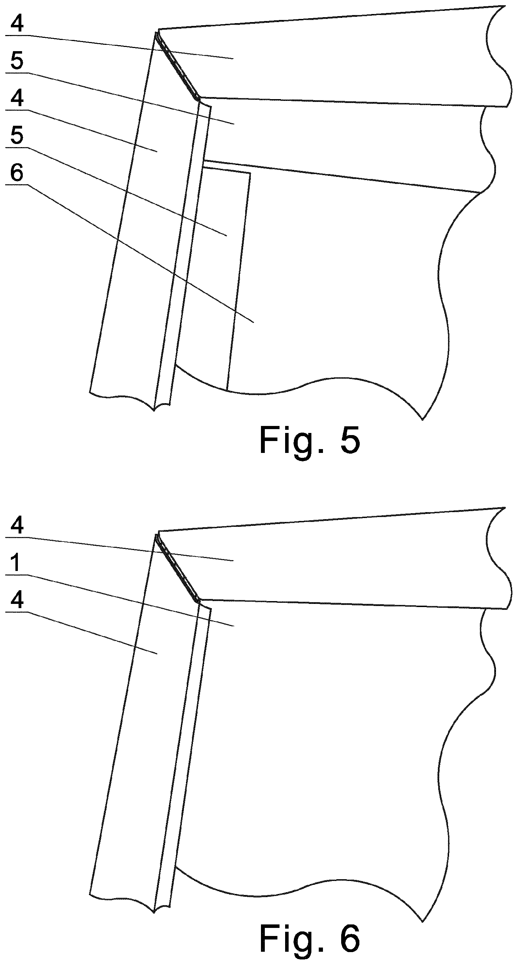

- fig. 5 -: presents, in a perspective view, the corner of the advertising frame with a closed upper hook of the advertising frame and hook-and-loop fasteners attached to the bottom plate of the advertising frame,
- fig. 6 -: presents, in a perspective view, the corner of the advertising frame with a closed upper hook of the advertising frame and the filling for the advertising frame attached.

As shown in the drawings, the subject of the invention is filling 1 for advertising frame 2 mounted in the appropriately modified, new version of advertising frame 2 described above, of the so-called snap frame. Filling 1 is typically made of nonwoven fabric obtained from plastics, i.e., nonwoven (also known as interfacing or spun bond). However, filling 1 can also be made of knitted or woven fabric obtained from plastics. Nonwoven fabric is polyester, which can additionally be made from recycled material (so-called RPET material) or virgin polyester, and it can also be further recycled. Therefore, filling 1 can be made from nonwoven fabric, for example, resulting from the recycling of plastic bottles.

Nonwoven fabric is produced from non-woven polypropylene (non-toxic PP material). The production process of interlining is specific and entirely different from the production process of traditional materials such as fabrics and knits (as it does not involve the use of yarn). Polypropylene nonwoven fabric is created by combining (using various techniques that determine the material's subsequent properties) short and long fibres arranged in an irregular manner. This results in a final product that is both lightweight and highly durable.

Filling 1 exhibits specific physical properties, namely is:
- ecological,
- chemically homogeneous (100% polyester), it is suitable for further recycling,
- durable - exhibits high resistance to mechanical damage (such as abrasion, tearing),
- elastic - does not deform,
- environmentally safe (biodegradable material),
- moisture-resistant,
- perfectly accepts dyes - interlining is an excellent base for various types of prints, especially those based on water-based sublimation inks,
- has a grammage ranging from 50 to 400 g/m²,
- has a material thickness ranging from 0.2 to 2 mm.

Filling 1 for advertising frame 2 on one side has print 3 depicting the advertising content of a specific seller, i.e. presents a sales offer, current product prices, or products currently on sale promotion. Print 3 is typically made using water-based inks on filling material 1.

Another element of the invention is the appropriately modified snap-lock advertising frame 2, preferably made of aluminium, suitably adjusted for the display of advertising prints in the form of filling 1, preferably made from nonwoven polyester material (also known as interlining) with a grammage ranging from 100 to 300 g/m².

Advertising frame 2, on the inner circumference of advertising frame 2 (i.e., on the inner surface of clips 4, i.e. the surface that, after inserting filling 1 into advertising frame 2 and closing clips 4, comes into contact with print 3 surface of filling 1 or on the inner edge of plate 6 of advertising frame 2), has attached the so-called 'hard' part of hook-and-loop fastener 5, i.e., the side of the hook-and-loop fastener 5 with hooks.

Hook-and-loop fastener 5 is attached to advertising frame 2 by means of adhesives, screwing, or riveting. Hook-and-loop fastener 5 typically has a width ranging from 5 to 70 mm, depending on the size of the frame and print.

Hook-and-loop fastener 5 allows for adapting the existing, known advertising frame 2 (adapted for the known prior art of printing on rigid media with a thickness ranging from 2 to 5 mm) to filling 1, which is the subject of the invention, with a thickness not exceeding 2 mm, by minimizing the thickness difference of filling 1 compared to the known prior art of printing on rigid media.

Additionally, using the so-called 'hard' part of hook-and-loop fastener 5, when filling 1 is inserted into advertising frame 2, the hooks of hook-and-loop fastener 5, mounted circumferentially (i.e., fastener 5 attached to plate 6 of advertising frame 2 or attached to clips 4 of advertising frame 2), engage with the nonwoven fabric (which is inherently somewhat rough) from which filling 1 is made. This facilitates assembly, stabilizes filling 1, and prevents filling 1 from sliding out of advertising frame 2, even in adverse weather conditions.

Additionally, optionally, it is envisaged to sew or glue on the so-called 'rear side' of filling 1 the soft part of hook-and-loop fastener 5 with 'loops' having a width ranging from 5 to 70 mm depending on the dimensions and climatic conditions all around the filling, only in the corners, or also locally/spot-wise, for example, in the middle of filling 1 (to prevent sagging or waving of the print, especially when very large sizes). Attaching the soft part of hook-and-loop fastener 5 aims to provide better alignment of filling 1 in frame 2 and even greater resistance to adverse weather conditions. During the installation of filling 1 in frame 2, the soft part of hook-and-loop fastener 5 adheres to the already glued or screwed hard part of the fastener on frame 2.

### List of elements:

1. filling;
2. advertising frame;
3. print;
4. clip;
5. hook-and-loop fastener;
6. plate.

## Claims

1. A filling (1) of the advertising frame (2) mounted in the advertising frame (2), of the 'open-insert-close' type, **characterized by that** the filling (1) is made of nonwoven fabric obtained from plastics, or knitted fabric obtained from plastics, or woven fabric obtained from plastics which material exhibits specific physical properties, i.e., the filling (1) is:
• ecological,
• chemically homogeneous (100% polyester), it is suitable for further recycling,
• durable - exhibits high resistance to mechanical damage (such as abrasion, tearing),
• elastic - does not deform,
• environmentally safe,
• moisture-resistant,
• has a grammage ranging from 50 to 400 g/m²,
• has a material thickness ranging from 0.2 to 2 mm, and at the same time the filling (1) of the advertising frame (2) has a print (3) on one side and is placed in a snap-lock advertising frame (2), where the advertising frame (2) on the inner circumference, i.e.:
- on the inner surface of the clips (4), i.e., the surface which, after inserting the filling (1) into the advertising frame (2) and closing the clips (4), comes into contact with the print (3) surface of the filling (1), or
- on the inner edge of the plate (6) of the advertising frame (2),
has a hook-and-loop fastener (5) attached with hooks, where the hook-and-loop fastener (5) is 5 to 70 mm wide.

2. The filling (1) of the advertising frame (2), according to claim 1, **characterized by that** the filling (1) is made of nonwoven fabric.

3. The filling (1) of the advertising frame (2), according to claim 1, **characterized by that** the filling (1) is made of recycled material, the so-called RPET material.

4. The filling (1) of the advertising frame (2), according to one of claims 1 to 3, **characterized by that** there is a print (3) on the filling material (1) made with water-based inks.

5. The filling (1) of the advertising frame (2), according to one of claims 1 to 3, **characterized by that** there is a print (3) on the filling material (1) made with water-based sublimation inks.

6. The filling (1) of the advertising frame (2), according to one of claims 1 to 5, **characterized by that** the advertising frame (2) is made of aluminium.

7. The filling (1) of the advertising frame (2), according to one of claims 1 to 6, **characterized by that** the hook-and-loop fastener (5) is attached to the advertising frame (2) by adhesion, screwing, or riveting.

8. The filling (1) of the advertising frame (2), according to one of claims 1 to 7, **characterized by that** a soft part of the hook-and-loop fastener (5) with loops is sewn or glued to the filling (1), where the fastener (5) has a width ranging from 5 to 70 mm.
